# EUROPÄISCHE PATENTANMELDUNG

(11) **EP 2 811 607 A1**
(43) Veröffentlichungstag der Anmeldung: **10.12.2014**
(21) Anmeldenummer: 13002924.2
(22) Anmeldetag: 06.06.2013
(51) Int. Cl.: H02J 3/14, H02J 3/00

(54) **Lokales Energiesystem**

(71) Anmelder: Diehl AKO Stiftung & Co. KG, 88239 Wangen (DE)
(72) Erfinder: Weinmann, Martin, 88339 Bad Waldsee (DE)
(74) Vertreter: Diehl Patentabteilung

(57) **Zusammenfassung**

Ein lokales Energiesystem enthält ein lokales Stromnetz (12), welches über einen Netzanschluss (18) an ein Stromversorgungsnetz angeschlossen ist; wenigstens einen leistungsgeregelten Verbraucher (16), welcher an das lokale Stromnetz (12) angeschlossen ist; wenigstens einen Iokalen Energieerzeuger (22), welcher an das lokale Stromnetz (12) angeschlossen ist; und einen Netzanschlusszähler (20), welcher die von dem lokalen Stromnetz (12) aus dem Stromversorgungsnetz bezogene Leistung und die von dem wenigstens einen lokalen Energieerzeuger (22) in das Stromversorgungsnetz eingespeiste Leistung erfasst. Ferner ist eine Steuereinrichtung (28) vorgesehen, welche mit dem Netzanschlusszähler (20) gekoppelt ist und welche eine Zeit und eine Höhe einer Leistungsaufnahme des wenigstens einen leistungsgeregelten Verbrauchers (16) aus dem lokalen Stromnetz (12) in Abhängigkeit von der von dem wenigstens einen lokalen Energieerzeuger (22) in das Stromversorgungsnetz eingespeisten Leistung steuert.

## Beschreibung

Die vorliegende Erfindung betrifft ein lokales Energiesystem sowie ein Verfahren zum Betreiben eines lokalen Energiesystems, insbesondere für die Haus- und Gebäudetechnik.

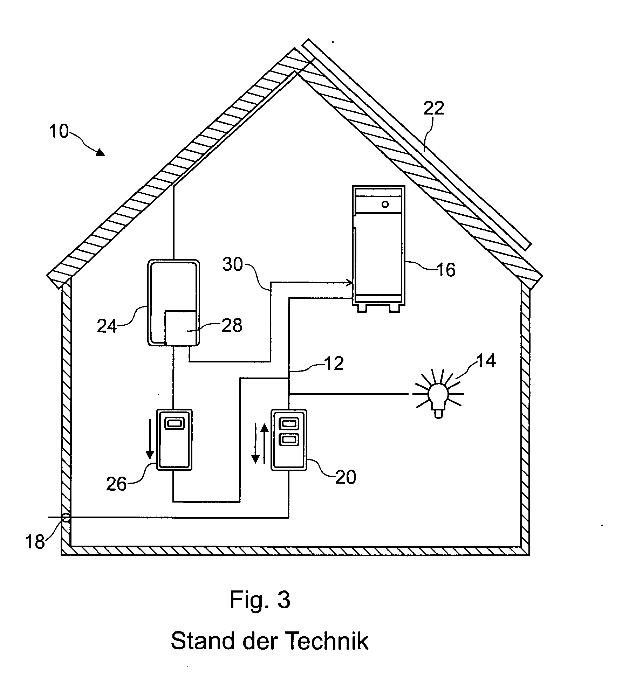

In Fig. 3 ist ein herkömmliches lokales Energiesystem für die Haus- und Gebäudetechnik veranschaulicht. Die bekannte Haus- und Gebäudetechnik mit einem regenerativen Energiesystem weist in einem Gebäude 10 ein lokales Stromnetz 12 auf, welches über einen Netzanschluss 18 an ein öffentliches Stromversorgungsnetz angeschlossen ist. An dieses lokale Stromnetz 12 sind ein regenerativer Energieerzeuger in Form einer Photovoltaikanlage 22 und mehrere Verbraucher 14, 16 angeschlossen. Zu diesen Verbrauchern gehören beispielsweise eine Wärmepumpe 16 zur Brauchwassererwärmung sowie weitere elektrische Verbraucher 14.

Der von der Photovoltaikanlage 22 erzeugte Strom wird über einen Solarwechselrichter 24 in das lokale Stromnetz / Niederspannungsnetz 12 des Gebäudes 10 eingespeist. Ein Solarstromzähler 26 misst die gesamte durch den Solarwechselrichter 24 ins lokale Stromnetz 12 eingespeiste Energie.

Die durch den Solarwechselrichter 24 ins lokale Stromnetz 12 eingespeiste Energie wird wahlweise von den elektrischen Verbrauchern 14, 16 verbraucht oder über den Netzanschluss 18 in das öffentliche Stromversorgungsnetz eingespeist. Ein Netzanschlusszähler 20 misst dabei die von dem lokalen Stromnetz 12 aus dem Stromversorgungsnetz bezogene Energiemenge bzw. die von der Photovoltaikanlage 22 in das Stromversorgungsnetz eingespeiste Energiemenge.

Es ist in diesem Zusammenhang von Vorteil und zum Teil auch staatlich gefördert, den Eigenverbrauchsanteil des in oder an Gebäuden 10 selbst produzierten Stroms, beispielsweise aus Photovoltaik, zu erhöhen. Am Markt werden dazu Lösungen angeboten, welche die Wärmepumpen 16 dann einschalten, wenn die Energieerzeugung der Photovoltaikanlage 22 die Leistungsaufnahme der weiteren Verbraucher 14 erwartungsgemäß oder tatsächlich messtechnische ermittelt um einen bestimmten Wert überschreitet.

Aufgrund der üblicherweise schwankenden Energieerzeugung der Photovoltaikanlage und auch des üblicherweise schwankenden (Gesamt-)Energieverbrauchs der weiteren Verbraucher in dem Gebäude, kann mit dieser herkömmlichen Lösung jedoch nicht verhindert werden, dass die Leistungsaufnahme der Wärmepumpe zu einem relativ großen Anteil aus dem Stromversorgungsnetz gedeckt wird.

Es ist deshalb eine Aufgabe der vorliegenden Erfindung, ein verbessertes lokales Energiesystem zu schaffen, mit welchem höhere Eigenverbrauchsanteile erzielt werden können.

Diese Aufgabe wird gelöst durch die Lehre der unabhängigen Ansprüche 1 und 6. Bevorzugte Ausgestaltungen und Weiterbildungen der Erfindung sind Gegenstand der jeweiligen abhängigen Ansprüche.

Das lokale Energiesystem gemäß der Erfindung weist ein lokales Stromnetz, welches über einen Netzanschluss an ein Stromversorgungsnetz angeschlossen ist; wenigstens einen leistungsgeregelten Verbraucher, welcher an das lokale Stromnetz angeschlossen ist; wenigstens einen lokalen Energieerzeuger, welcher an das lokale Stromnetz angeschlossen ist; und einen Netzanschlusszähler, welcher die von dem lokalen Stromnetz aus dem Stromversorgungsnetz bezogene Leistung und Energiemenge und die von dem wenigstens einen lokalen Energieerzeuger in das Stromversorgungsnetz eingespeiste Leistung und Energiemenge erfasst, auf und ist dadurch gekennzeichnet, dass eine Steuereinrichtung vorgesehen ist, welche mit dem Netzanschlusszähler gekoppelt ist und welche ausgebildet ist, um eine Zeit und eine Höhe einer Leistungsaufnahme des wenigstens einen leistungsgeregelten Verbrauchers aus dem lokalen Stromnetz in Abhängigkeit von der von dem wenigstens einen lokalen Energieerzeuger in das Stromversorgungsnetz eingespeisten Leistung zu steuern.

Mit dem lokalen Energiesystem der Erfindung kann bei der Verwendung von leistungsgeregelten Verbrauchern der Eigenverbrauchsanteil des aus lokalen Energiequellen selbst erzeugten Stroms erhöht werden. Die Erhöhung des Eigenverbrauchsanteils kann in vorteilhafter Weise zu einer Entlastung des Stromversorgungsnetzes führen. Außerdem wird der Eigenverbrauch zum Teil staatlich gefördert, sodass die Energiekosten für den Nutzer des Energiesystems geringer werden. Schließlich kann eine Erhöhung des Eigenverbrauchsanteils auch zu einer größeren Unabhängigkeit des Nutzers vom Stromversorgungsnetz führen.

Während bei den eingangs beschriebenen herkömmlichen Energiesystemen bereits Lösungen existieren, bei denen Verbraucher in Abhängigkeit von der von dem wenigstens einen lokalen Energieerzeuger in das Stromversorgungsnetz eingespeisten Leistung ein- und ausgeschaltet werden, d.h. nur dann in Betrieb genommen werden, wenn genügend selbst erzeugter Strom vorhanden ist, werden bei dem lokalen Energiesystem der Erfindung durch die Steuereinrichtung die Zeit und die Höhe der Leistungsaufnahme des wenigstens einen leistungsgeregelten Verbrauchers gesteuert. Mit anderen Worten, wird der leistungsgeregelte Verbraucher von der Steuereinrichtung nur dann in Betrieb genommen, wenn genügend selbst erzeugter Strom im lokalen Stromnetz zur Verfügung steht, und wird außerdem seine Leistungsaufnahme durch die Steuereinrichtung so moduliert, dass er während seiner gesamten Betriebszeit zu einem möglichst hohen Anteil, am besten vollständig durch den vom regenerativen Energieerzeuger erzeugten Strom versorgt wird. Da eine Drosselung der Leistungsaufnahme nicht bei allen Arten von elektrischen Verbrauchern möglich ist, ist dieses erfindungsgemäße Energiemanagement nur bei leistungsgeregelten Verbrauchern einsetzbar. Gerade bei solchen leistungsgeregelten Verbrauchern besteht aber häufig die Möglichkeit, diese zu beliebigen (Tages-) Zeiten und/oder unabhängig von einem aktuellen Nutzerverhalten in Betrieb zu nehmen, sodass diese Einschränkung in der Praxis keinen oder zumindest keinen nennenswerten Nachteil darstellt. So werden beispielsweise Wärmepumpen zur Brauchwassererwärmung in der Regel ohnehin nur einmal am Tag in Betrieb genommen, um einen größeren Vorrat an warmem Wasser zu erzeugen und das warme Wasser kann auch in unterschiedlichen Leistungsstufen ausreichend erwärmt werden.

Unter einem lokalen Stromnetz soll in diesem Zusammenhang jede Art von Stromnetz verstanden werden, welches lokal begrenzt ist (zum Beispiel in einem Haus, Gebäude, Firmengelände, Schulkomplex, etc.). An das lokale Stromnetz kann vorzugsweise nur eine begrenzte Anzahl von Verbrauchern angeschlossen werden. Das lokale Stromnetz ist vorzugsweise nicht für beliebige Dritte frei zugänglich. Bei dem lokalen Stromnetz handelt es sich vorzugsweise um ein Niederspannungsnetz, die Erfindung ist jedoch grundsätzlich auch für Mittel- und Hochspannungsnetze einsetzbar.

Unter einem Stromversorgungsnetz soll in diesem Zusammenhang jede Art von Stromnetz verstanden werden, welches von einem Stromanbieter vorzugsweise öffentlich bereitgestellt wird.

Der Begriff des leistungsgeregelten Verbrauchers soll in diesem Zusammenhang jede Art von elektrischen Verbrauchern umfassen, deren Betrieb mit unterschiedlichen Leistungsaufnahmen bzw. in unterschiedlichen Leistungsstufen möglich ist. Hiervon zu unterscheiden sind solche elektrischen Verbraucher, die lediglich ein- und ausgeschaltet werden können, d.h. nur mit einer einzigen fest vorgegebenen Leistungsstufe betrieben werden können. Zu den leistungsgeregelten Verbrauchern in diesem Sinne zählen insbesondere Wärmepumpen, Wärmepumpen zur Brauchwassererwärmung, Wärmepumpen zur Raumheizung, Sole, Wasser und Luftwärmepumpen, Heizstäbe, Elektromotoren mit Drehzahlregelung, Klimaanlagen und -geräte, Lüfter und Ventilatoren, Kompressoren, Pumpen, elektromagnetische Aktuatoren, Kühl- und Gefrierschränke und dergleichen. Besonders vorteilhaft ist der Einsatz der Erfindung in Zusammenhang mit einer Wärmepumpe, insbesondere einer Wärmepumpe zur Brauchwassererwärmung oder zur Raumheizung als leistungsgeregeltem Verbraucher. Zu den leistungsgeregelten Verbrauchern im Sinne der Erfindung zählen darüber hinaus auch elektrische Energiespeicher zum Speichern der elektrischen Energie, direkt über Akkus oder indirekt über Druckluft oder Wasserstoffspeicher für einen späteren Verbrauch, sowie elektrische Ladesysteme zum Aufladen elektrischer Verbraucher (z.B. Akkus von Elektrofahrzeugen).

Das lokale Energiesystem der Erfindung weist wenigstens einen solchen leistungsgeregelten Verbraucher auf, d.h. einen, zwei, drei oder mehr solcher leistungsgeregelter Verbraucher. Im Fall von zwei oder mehr leistungsgeregelten Verbrauchern werden vorzugsweise alle von der (zentralen) Steuereinrichtung in der erfindungsgemäßen Weise angesteuert.

Die Steuereinrichtung steuert sowohl die Zeit (Zeitpunkt, Zeitdauer, etc.) als auch die Höhe der Leistungsaufnahme des wenigstens einen leistungsgeregelten Verbrauchers. Diese Modulation der Leistungsaufnahme erfolgt vorzugsweise kontinuierlich, quasi-kontinuierlich, abschnittsweise kontinuierlich, schrittweise, stufenweise oder dergleichen.

In einer bevorzugten Ausgestaltung der Erfindung ist die Steuereinrichtung ausgebildet, um die Leistungsaufnahme des wenigstens einen leistungsgeregelten Verbrauchers aus dem lokalen Stromnetz derart zu steuern, dass die von dem wenigstens einen lokale Energieerzeuger in das Stromversorgungsnetz eingespeiste Leistung (möglichst) größer oder gleich Null ist. Dies bedeutet, dass der leistungsgeregelte Verbraucher ausschließlich durch den vom Energiesystem selbst erzeugten Strom betrieben werden kann und kein Bezug von zusätzlichem Strom aus dem Stromversorgungsnetz erforderlich ist.

In einer weiteren bevorzugten Ausgestaltung der Erfindung ist der leistungsgeregelte Verbraucher über einen Frequenzumrichter an das lokale Stromnetz angeschlossen und steuert die Steuereinrichtung diesen Frequenzumrichter derart an, dass er die Leistungsaufnahme des wenigstens einen leistungsgeregelten Verbrauchers aus dem lokalen Stromnetz moduliert, d.h. in der Höhe variiert, falls erforderlich.

In einer weiteren bevorzugten Ausgestaltung der Erfindung ist die Steuereinrichtung auch ausgebildet, um die Leistungsaufnahme des wenigstens einen leistungsgeregelten Verbrauchers aus dem lokalen Stromnetz in Abhängigkeit von Vorhersagen betreffend eine Stromerzeugung durch den wenigstens einen lokalen Energieerzeuger und/oder eine Leistungsaufnahme weiterer an das lokale Stromnetz angeschlossener Verbraucher zu steuern. Mit dieser Maßnahme kann erreicht werden, dass der leistungsgeregelte Verbraucher (möglichst) nur dann von der Steuereinrichtung in Betrieb genommen ist, wenn der Überschuss des vom Energiesystem selbst erzeugten Stroms für eine ausreichend lange Zeit zu erwarten ist. Die Vorhersagen können vorzugsweise auf Basis von Erfahrungswerten der Stromerzeugung und des Stromverbrauchs im Energiesystem für vergangene Zeiträume, aus Wettervorhersagen, aus Programmierungen des Energiemanagementsystems und dergleichen basieren.

In einer weiteren alternativen Ausgestaltung der Erfindung ist der lokale Energieerzeuger ein regenerativer Energieerzeuger. Der Begriff des lokalen Energieerzeugers umfasst in diesem Zusammenhang jede Art von Vorrichtung, die geeignet ist, elektrische Energie aus regenerativen Energiequellen zu gewinnen. Zu den regenerativen Energieerzeugern zählen in diesem Zusammenhang insbesondere Photovoltaikanlagen, Windkraftanlagen, mit Biomasse, Biogas, oder mit sonstigen regenativ erzeugten Brennstoffen wie z.B. Wasserstoff oder Methan gespeisten Kraftwärmekopplungsanlagen und dergleichen.

Alternativ dazu kann ein lokaler Energieerzeuger aus nicht regenerativen, also konventionellen Energiequellen Energie gewinnen. Zu den nicht regenerativen Energieerzeugern gehört z.B. mit Erdgas betriebene Kraftwärmekopplungsanlagen, die in der vereinfachten verbreiteten Ausführung nicht modulierend betrieben werden, sondern bei Betrieb eine konstante elektrische Leistung liefern.

Gegenstand der Erfindung ist auch ein Verfahren zum Betreiben eines lokalen Energiesystems mit einem lokalen Stromnetz, welches über einen Netzanschluss an ein Stromversorgungsnetz angeschlossen ist, wenigstens einem leistungsgeregelten Verbraucher, welcher an das lokale Stromnetz angeschlossen ist, und wenigstens einem lokalen Energieerzeuger, welcher an das lokale Stromnetz angeschlossen ist, bei welchem erfindungsgemäß eine Zeit und eine Höhe einer Leistungsaufnahme des wenigstens einen leistungsgeregelten Verbrauchers aus dem lokalen Stromnetz in Abhängigkeit von der von dem wenigstens einen lokalen Energieerzeuger in das Stromversorgungsnetz eingespeisten Leistung gesteuert werden.

Mit diesem Verfahren lassen sich die gleichen Vorteile erzielen wie sie oben in Zusammenhang mit dem lokalen Energiesystem der Erfindung beschrieben worden sind. Bezüglich der Vorteile, der bevorzugten Ausgestaltungen und der Begriffsdefinitionen wird an dieser Stelle nur auf die obigen Ausführungen in Zusammenhang mit dem lokalen Energiesystem der Erfindung verwiesen.

Gegenstand der Erfindung ist schließlich auch eine Steuereinrichtung für das lokale Energiesystem der Erfindung bzw. zur Durchführung des erfindungsgemäßen Verfahrens. Die Steuereinrichtung ist insbesondere ausgebildet, um eine Zeit und eine Höhe einer Leistungsaufnahme wenigstens eines leistungsgeregelten Verbrauchers aus einem lokalen Stromnetz in Abhängigkeit von der von wenigstens einem lokalen Energieerzeuger in ein Stromversorgungsnetz eingespeisten Leistung zu steuern.

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigen:
- Fig. 1: eine schematische Darstellung eines lokalen Energiesystems gemäß einem bevorzugten Ausführungsbeispiel der vorliegenden Erfindung;
- Fig. 2: ein schematisches Leistungs-Tageszeit-Diagramm zur Veranschaulichung der Funktionsweise des lokalen Energiesystems von Fig. 1; und
- Fig. 3: eine schematische Darstellung eines herkömmlichen lokalen Energiesystems.

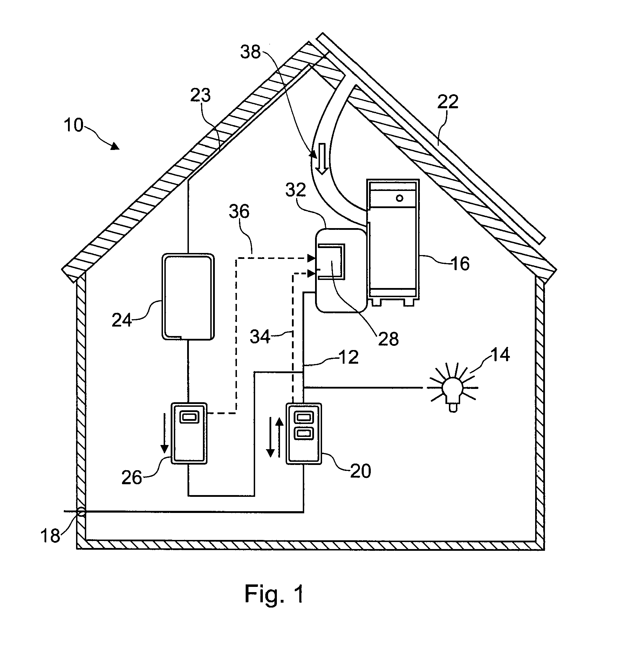

In Fig. 1 ist beispielhaft ein lokales regeneratives Energiesystem gemäß einem bevorzugten Ausführungsbeispiel der Erfindung veranschaulicht. Dabei sind gleiche bzw. entsprechende Komponenten mit den gleichen Bezugsziffern gekennzeichnet wie bei dem herkömmlichen lokalen Energiesystem von Fig. 3.

Ein Gebäude 10, zum Beispiel ein privates Haus, ein Schulgebäude, ein Firmengebäude oder ein Gewerbebetrieb, besitzt ein lokales Stromnetz 12, an welches zahlreiche elektrische Verbraucher 14 (z.B. Beleuchtung, Mediengeräte, Telefonanlagen, Haushaltsgeräte, etc.) sowie ein oder mehrere leistungsgeregelte Verbraucher 16 (z.B. Wärmepumpen, Klimageräte, Lüfter, Heizstäbe, Elektromotoren mit Drehzahlregelung, Kompressoren, Pumpen, elektromagnetische Aktuatoren, Kühl- und Gefrierschränke, Energiespeicher, Ladegeräte, etc.) angeschlossen bzw. anschließbar sind. Im vorliegenden Ausführungsbeispiel ist an das lokale Stromnetz 12 des Gebäudes 10 beispielhaft eine Wärmepumpe zur Brauchwassererwärmung oder Raumheizung als leistungsgeregelter Verbraucher 16 angeschlossen.

Das lokale Stromnetz 12 des Gebäudes 10 ist über einen Netzanschluss 18 an ein (öffentliches) Stromversorgungsnetz angeschlossen. Ein Netzanschlusszähler 20 erfasst dabei die vom lokalen Stromnetz 12 aus dem Stromversorgungsnetz bezogene Leistung und Energiemenge.

An dem Gebäude 10, in diesem Ausführungsbeispiel auf dem Dach des Gebäudes, ist eine Photovoltaikanlage 22 angebracht. Anstelle oder zusätzlich zu der Photovoltaikanlage können auch andere regenerative Energieerzeuger, wie beispielsweise Windkraftanlagen, mit regenerativen Kraftstoffen gespeiste Kraftwärmekopplungsanlagen und dergleichen vorgesehen sein.

In diesem speziellen Ausführungsbeispiel ist eine Luftwärmepumpe 16 vorgesehen, welche über einen Warmluftkanal 38 Luft unterhalb der Photovoltaikmodule 22 ansaugt. Bei Sonneneinstrahlung wird die Luft zwischen den Photovoltaikmodulen 22 und dem Gebäudedach erwärmt. Diese zusätzliche Erwärmung der Luft erhöht den Wirkungsgrad der Luftwärmepumpe 16. Andererseits werden die Photovoltaikmodule 22 über den Warmluftkanal 38 zwangsbelüftet und damit gekühlt, was wiederum den Wirkungsgrad der Photovoltaikanlage steigert. Des Weiteren kann die Abluft der Wärmepumpe 16 zur Raumkühlung des Gebäudes 10 und/oder zur weiteren Kühlung der Photovoltaikmodule benutzt werden.

Der von der Photovoltaikanlage 22 bei entsprechender Sonneneinstrahlung erzeugte Gleichstrom wird über eine Stromleitung 23 einem Solarwechselrichter 24 zugeführt, der den erzeugten Gleichstrom in einen für das lokale Stromnetz 12 geeigneten Wechselstrom umwandelt. Ein (optionaler) Solarstromzähler 26 misst dabei die von der Photovoltaikanlage 22 erzeugte und in das lokale Stromnetz 12 eingespeiste Leistung und Energiemenge.

In diesem regenerativen Energiesystem sollen die Verbraucher 14, 16 möglichst aus dem von der Photovoltaikanlage 22 erzeugten Strom versorgt werden. Übersteigt der Strombedarf der Verbraucher 14, 16 diesen selbst erzeugten Strom des Energiesystems, so bezieht das lokale Stromnetz 12 über den Netzanschluss 18 zusätzlich Energie aus dem Stromversorgungsnetz. Übersteigt hingegen die von der Photovoltaikanlage erzeugte Strommenge den Strombedarf der Verbraucher 14, 16, so speist das Energiesystem diesen Energieüberschuss über den Netzanschluss 18 in das Stromversorgungsnetz ein. Der Netzanschlusszähler 20 erfasst dabei - je nach Energiebilanz - entweder die vom lokalen Stromnetz 12 aus dem Stromversorgungsnetz bezogene Leistung und Energiemenge oder die vom Energiesystem in das Stromversorgungsnetz eingespeiste Leistung und Energiemenge.

Der Betrieb der Wärmepumpe 16 wird von einer Steuereinrichtung 28 über einen Frequenzumrichter 32 gesteuert. Dabei ist die Steuereinrichtung 28 über eine Signalleitung 34 mit dem Netzanschlusszähler 20 und optional über eine weitere Signalleitung 36 auch mit dem Solarstromzähler 26 gekoppelt. Die Signalleitungen 34, 36 können drahtgebunden oder drahtlos (z.B. per Funk) ausgebildet sein.

Der Steuereinrichtung 28 wird über diese Signalleitungen 34, 36 von den Zählern 20, 26 insbesondere die aktuelle Energiebilanz mitgeteilt. D.h. die Steuereinrichtung 28 ist mittels Signalleitung 34 über die Differenz zwischen der von der Photovoltaikanlage 22 erzeugten Leistung und der Leistung der Verbraucher 14 bzw. die in das Stromversorgungsnetz eingespeiste Leistung oder die aus diesem bezogene Leistung informiert. Mittels optionaler zusätzlicher Signalleitung 36 kann die Steuereinrichtung 28 das Leistungsprofil von Erzeuger 22 und Verbraucher 14 erfassen bzw. berechnen und diese Information für den optimalen Einschaltzeitpunk des leistungsmodulierten Verbrauchers 16 verwenden.

Die Steuereinrichtung 28 ist so ausgebildet, dass der Eigenverbrauchsanteil des lokalen regenerativen Energiesystems möglichst hoch und damit optimiert ist. Mit anderen Worten sollen die an das lokale Stromnetz 12 des Gebäudes 10 angeschlossenen Verbraucher 14, 16 soweit möglich mit dem von der Photovoltaikanlage 22 erzeugten Strom betrieben werden.

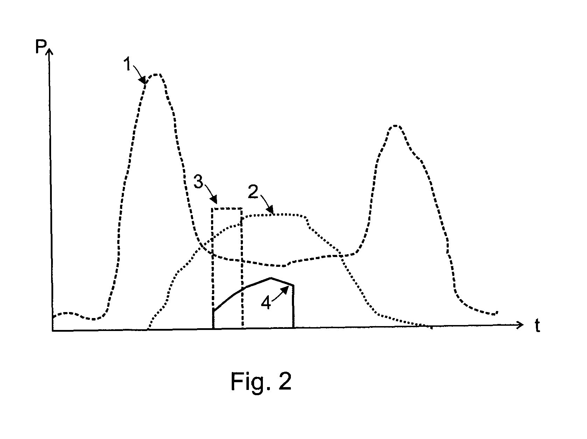

Fig. 2 veranschaulicht in diesem Zusammenhang den Energieverlauf bzw. die Leistungsaufnahme P im Laufe eines Tages. So zeigt die Kurve 1 beispielhaft den Stromverbrauch der Verbraucher 14 des Gebäudes 10 (ohne die Wärmepumpe 16). Die Kurve 2 zeigt beispielhaft den von der Photovoltaikanlage 22 an einem sonnigen Wintertag in das lokale Stromnetz 12 eingespeisten Solarstrom.

Wie in Fig. 2 dargestellt, übersteigt der Stromverbrauch der Verbraucher 14 üblicherweise in den Morgen- und den Abendstunden den von der Photovoltaikanlage 22 erzeugten Solarstrom (Kurve 1 verläuft oberhalb Kurve 2). In diesen Zeiträumen muss das lokale Stromnetz 12 des Gebäudes 10 zusätzlich Energie aus dem Stromversorgungsnetz beziehen. Der Eigenverbrauchsanteil des regenerativen Energiesystems könnte in diesem Zusammenhang beispielsweise durch ein geändertes bzw. angepasstes Nutzerverhalten oder zusätzlichen elektrischen Energiespeichern wie Akkus erhöht werden.

Zur Erhöhung des Eigenverbrauchsanteils des regenerativen Energiesystems wird die Wärmepumpe 16 möglichst dann betrieben, wenn der von der Photovoltaikanlage 22 erzeugte Solarstrom den Stromverbrauch der weiteren Verbraucher 14 übersteigt (Kurve 2 verläuft oberhalb Kurve 1). In herkömmlichen Energiesystemen, wie in der eingangs beschriebenen Fig. 1, ist die Steuereinrichtung 28 diesbezüglich so ausgebildet, dass sie die Wärmepumpe 16 einschaltet, wenn der von der Photovoltaikanlage 22 erzeugte Solarstrom den Stromverbrauch der weiteren elektrischen Verbraucher um einen vorbestimmten Wert übersteigt (vgl. Kurve 3 in Fig. 2). Dies bedeutet in der Regel allerdings, dass der Energiebedarf der Wärmepumpe 16 nicht vollständig durch den von der Photovoltaikanlage 22 erzeugten Solarstrom gedeckt werden kann (Summe der Kurven 1 und 3 größer als Kurve 2).

Der Lösungsansatz des regenerativen Energiesystems der Erfindung geht daher noch einen Schritt weiter. Die Steuereinrichtung 28 des Energiesystems ist so ausgebildet, dass sie die Leistungsaufnahme der Wärmepumpe 16 modulieren kann. D.h. sie steuert nicht nur die Zeit, sondern auch die Höhe der Leistungsaufnahme der Wärmepumpe 16. Diese Modulation der Leistungsaufnahme erfolgt mit Hilfe des der Wärmepumpe 16 zugeordneten Frequenzumrichters 32. Eine solche Leistungsmodulation ist möglich, weil die Wärmepumpe 16 nicht notwendigerweise mit der maximalen Leistung betrieben werden muss, um das Brauchwasser zu erwärmen, und die Erwärmung des Brauchwassers nicht notwendigerweise innerhalb eines kurzen Zeitraums abgeschlossen sein muss.

Die Steuereinrichtung 28 steuert die Zeit und die Höhe der Leistungsaufnahme der Wärmepumpe 16 aus dem lokalen Stromnetz 12 in Abhängigkeit von der von der Photovoltaikanlage 22 in das Stromversorgungsnetz eingespeisten Leistung, d.h. in Abhängigkeit von der aktuellen Energiebilanz des lokalen Energiesystems. Dabei steuert die Steuereinrichtung 28 die Leistungsaufnahme der Wärmepumpe 16 aus dem lokalen Stromnetz 12 möglichst so, dass die von der Photovoltaikanlage 22 in das Stromversorgungsnetz eingespeiste Leistung größer oder gleich Null ist, d.h. keine Energie aus dem Stromversorgungsnetz bezogen werden muss.

In Fig. 2 ist die erfindungsgemäß modulierte Leistungsaufnahme der Wärmepumpe 16 durch die Kurve 4 veranschaulicht. Es ist in Fig. 2 außerdem erkennbar, dass während der gesamten Betriebsdauer der Wärmepumpe 16 die Summe der Leistungsaufnahmen der Wärmepumpe 16 (Kurve 4) und der weiteren Verbraucher 14 (Kurve 1) maximal der erzeugten Solarstromleistung (Kurve 2) entspricht. Die maximale Leistungsaufnahme der Wärmepumpe 16 wird dabei jeweils durch die Steuereinrichtung 28 mit dem Ziel der Eigenverbrauchsoptimierung vorgegeben, d.h. fortlaufend an die Anforderungen für die Optimierung des Eigenverbrauchsanteils angepasst.

Außerdem entspricht das Integral unter Kurve 4 etwa dem Integral unter der Kurve 3. Mit anderen Worten verbraucht die Wärmepumpe 16 im Fall der modulierten Leistungsaufnahme (Kurve 4) insgesamt etwa genauso viel Energie zur Erwärmung des Brauchwassers wie bei der herkömmlichen Leistungsaufnahme (Kurve 3).

Neben der Modulation der Leistungsaufnahme der Wärmepumpe 16 kann zusätzlich auch noch der Einschaltzeitpunkt anders gewählt werden, um den Eigenverbrauchsanteil des regenerativen Energiesystems weiter zu erhöhen. So kann die Steuereinrichtung 28 zum Steuern der Leistungsaufnahme der Wärmepumpe 16 zum Beispiel auch noch Vorhersagen betreffend eine Stromerzeugung durch die Photovoltaikanlage 22 (Kurve 2) und/oder eine Leistungsaufnahme der weiteren Verbraucher 14 (Kurve 1) berücksichtigen. Beispielsweise kann anhand von Wettervorhersagen und Erfahrungswerten der Verlauf der Kurve 2 für den aktuellen Tag abgeschätzt werden. Ebenso kann beispielsweise anhand von Erfahrungswerten und Programmierungen eines Energiemanagementsystems der Verlauf der Kurve 1 für den aktuellen Tag abgeschätzt werden. Aus diesen Abschätzungen der Kurven 1 und 2 für den weiteren Tagesverlauf kann die Steuereinrichtung 28 einen optimalen Einschaltzeitpunkt für die Wärmepumpe 16 bestimmen, für den dann die oben beschriebenen Leistungsbilanzen für die gesamte Betriebsdauer der Wärmepumpe 16 gelten.

Mit dem lokalen Energiesystem der Erfindung kann die nur temporär zur Verfügung stehende Energie der Photovoltaikanlage optimal genutzt bzw. (in Form von Wärmeenergie) gespeichert werden.

In modernen, insbesondere gut isolierten Gebäuden kann auch die Wärmekapazität des Gebäudes selbst als Energiespeicher genutzt werden. So kann die Wärmepumpe 16 zum Beispiel im Winterhalbjahr an sonnigen Tagen die Räume des Gebäudes 10 um 2°C aufheizen, sodass die Räume dann abends gemütlich warm sind, bevor sie sich nachts wieder um 2°C abkühlen. Hierdurch kann die herkömmlicherweise morgens und abends benötigte elektrische Leistung zur Raumheizung minimiert werden.

Das oben beschriebene lokale Energiesystem kann in gleicher Weise auch mit zwei oder mehr leistungsgeregelten Verbrauchern 16 betrieben werden. In diesem Fall wird vorzugsweise eine zentrale Steuereinrichtung 28 verwendet. Alternativ können auch einzelne, miteinander gekoppelte Steuereinrichtungen 28 zum Ansteuern der leistungsgeregelten Verbraucher 16 eingesetzt werden.

### BEZUGSZIFFERNLISTE

- 10: Gebäude
- 12: lokales Stromnetz
- 14: Verbraucher
- 16: leistungsgeregelte Verbraucher
- 18: Netzanschluss
- 20: Netzanschlusszähler
- 22: Photovoltaikanlage
- 23: Stromleitung
- 24: Solarwechselrichter
- 26: Solarstromzähler
- 28: Steuereinrichtung
- 30: Steuerleitung
- 32: Frequenzumrichter
- 34: Signalleitung
- 36: Signalleitung
- 38: Warmluftkanal

## Patentansprüche

1. Lokales Energiesystem, mit
einem lokalen Stromnetz (12), welches über einen Netzanschluss (18) an ein Stromversorgungsnetz angeschlossen ist;
wenigstens einem leistungsgeregelten Verbraucher (16), welcher an das lokale Stromnetz (12) angeschlossen ist;
wenigstens einem lokalen Energieerzeuger (22), welcher an das lokale Stromnetz (12) angeschlossen ist; und
einem Netzanschlusszähler (20), welcher die von dem lokalen Stromnetz (12) aus dem Stromversorgungsnetz bezogene Leistung und die von dem wenigstens einen lokalen regenerativen Energieerzeuger (22) in das Stromversorgungsnetz eingespeiste Leistung erfasst,
**dadurch gekennzeichnet, dass**
eine Steuereinrichtung (28) vorgesehen ist, welche mit dem Netzanschlusszähler (20) gekoppelt ist und welche ausgebildet ist, um eine Zeit und eine Höhe einer Leistungsaufnahme des wenigstens einen leistungsgeregelten Verbrauchers (16) aus dem lokalen Stromnetz (12) in Abhängigkeit von der von dem wenigstens einen lokalen Energieerzeuger (22) in das Stromversorgungsnetz eingespeisten Leistung zu steuern.

2. Lokales Energiesystem nach Anspruch 1,
**dadurch gekennzeichnet, dass**
die Steuereinrichtung (28) ausgebildet ist, um die Leistungsaufnahme des wenigstens einen leistungsgeregelten Verbrauchers (16) aus dem lokalen Stromnetz (12) derart zu steuern, dass die von dem wenigstens einen lokalen Energieerzeuger (22) in das Stromversorgungsnetz eingespeiste Leistung größer oder gleich Null ist.

3. Lokales Energiesystem nach Anspruch 1 oder 2,
**dadurch gekennzeichnet, dass**
der leistungsgeregelte Verbraucher (16) über einen Frequenzumrichter (32) an das lokale Stromnetz (12) angeschlossen ist; und
die Steuereinrichtung (28) diesen Frequenzumrichter (32) ansteuert, um die Leistungsaufnahme des wenigstens einen leistungsgeregelten Verbrauchers (16) aus dem lokalen Stromnetz (12) zu modulieren.

4. Lokales Energiesystem nach einem der vorhergehenden Ansprüche,
**dadurch gekennzeichnet, dass**
die Steuereinrichtung (28) ausgebildet ist, um die Leistungsaufnahme des wenigstens einen leistungsgeregelten Verbrauchers (16) aus dem lokalen Stromnetz (12) in Abhängigkeit von Vorhersagen betreffend eine Stromerzeugung durch den wenigstens einen lokalen Energieerzeuger (22) und/oder eine Leistungsaufnahme weiterer an das lokale Stromnetz (12) angeschlossener Verbraucher (14) zu steuern.

5. Lokales Energiesystem nach einem der vorhergehenden Ansprüche,
**dadurch gekennzeichnet, dass**
der wenigstens eine leistungsgeregelte Verbraucher (16) eine Wärmepumpe, insbesondere eine Wärmepumpe zur Brauchwassererwärmung oder zur Raumheizung aufweist.

6. Lokales Energiesystem nach einem der vorhergehenden Ansprüche,
**dadurch gekennzeichnet, dass**
der lokale Energieerzeuger ein regenerativer Energieerzeuger ist.

7. Verfahren zum Betreiben eines lokales Energiesystems mit einem lokalen Stromnetz (12), welches über einen Netzanschluss (18) an ein Stromversorgungsnetz angeschlossen ist, wenigstens einem leistungsgeregelten Verbraucher (16), welcher an das lokale Stromnetz (12) angeschlossen ist, und wenigstens einem lokalen Energieerzeuger (22), welcher an das lokale Stromnetz (12) angeschlossen ist,
**dadurch gekennzeichnet, dass**
eine Zeit und eine Höhe einer Leistungsaufnahme des wenigstens einen leistungsgeregelten Verbrauchers (16) aus dem lokalen Stromnetz (12) in Abhängigkeit von der von dem wenigstens einen lokalen Energieerzeuger (22) in das Stromversorgungsnetz eingespeisten Leistung gesteuert werden.

8. Verfahren nach Anspruch 7,
**dadurch gekennzeichnet, dass**
die Leistungsaufnahme des wenigstens einen leistungsgeregelten Verbrauchers (16) aus dem lokalen Stromnetz (12) derart gesteuert wird, dass die von dem wenigstens einen lokalen Energieerzeuger (22) in das Stromversorgungsnetz eingespeiste Leistung größer oder gleich Null ist.

9. Verfahren nach Anspruch 7 oder 8,
**dadurch gekennzeichnet, dass**
die Leistungsaufnahme des wenigstens einen leistungsgeregelten Verbrauchers (16) aus dem lokalen Stromnetz (12) über einen Frequenzumrichter (32) zu moduliert wird.

10. Verfahren nach einem der Ansprüche 7 bis 9,
**dadurch gekennzeichnet, dass**
die Leistungsaufnahme des wenigstens einen leistungsgeregelten Verbrauchers (16) aus dem lokalen Stromnetz (12) in Abhängigkeit von Vorhersagen betreffend eine Stromerzeugung durch den wenigstens einen lokalen Energieerzeuger (22) und/oder eine Leistungsaufnahme weiterer an das lokale Stromnetz (12) angeschlossener Verbraucher (14) gesteuert wird.

11. Verfahren nach einem der Ansprüche 7 bis 10,
**dadurch gekennzeichnet, dass**
die von dem lokalen Stromnetz (12) aus dem Stromversorgungsnetz bezogene Leistung bzw. die von dem wenigstens einen lokalen Energieerzeuger (22) in das Stromversorgungsnetz eingespeiste Leistung erfasst werden.

12. Verfahren nach einem der Ansprüche 7 bis 11,
**dadurch gekennzeichnet, dass**
der wenigstens eine leistungsgeregelte Verbraucher (16) eine Wärmepumpe, insbesondere eine Wärmepumpe zur Brauchwassererwärmung oder zur Raumheizung aufweist.

13. Verfahren nach einem der Ansprüche 7 bis 12,
**dadurch gekennzeichnet, dass**
der lokale Energieerzeuger durch regenerative Energien gespeist wird.

14. Steuereinrichtung (28) für ein lokales Energiesystem nach einem der Ansprüche 1 bis 6 und/oder zur Durchführung eines Verfahrens nach einem der Ansprüche 7 bis 13, welche ausgebildet ist, um eine Zeit und eine Höhe einer Leistungsaufnahme wenigstens eines leistungsgeregelten Verbrauchers (16) aus einem lokalen Stromnetz (12) in Abhängigkeit von der von wenigstens einem lokalen Energieerzeuger (22) in ein Stromversorgungsnetz eingespeisten Leistung zu steuern.
